# EUROPÄISCHE PATENTSCHRIFT

(11) **EP 0 864 049 B1**
(45) Veröffentlichungstag und Bekanntmachung des Hinweises auf die Patenterteilung: **21.03.2001**
(21) Anmeldenummer: 96941614.8
(22) Anmeldetag: 28.11.1996
(51) Int. Cl.: F16B 13/12

(54) **DÜBEL MIT VORSPRÜNGE AUFWEISENDER HÜLSE**
DOWEL WITH PROJECTION-BEARING SLEEVE
CHEVILLE AVEC DOUILLE POURVUE DE SAILLIES

(30) Priorität: 01.12.1995 DE 19544970
(43) Veröffentlichungstag der Anmeldung: 16.09.1998
(73) Patentinhaber: EJOT Kunststofftechnik GmbH & Co. KG, D-57319 Bad Berleburg (DE)
(72) Erfinder: RIECKE, Ernst-Hermann, D-57319 Bad Berleburg (DE)
(74) Vertreter: Geissler, Bernhard, Dr.jur., Dipl.-Phys.
(86) Internationale Anmeldenummer: EP9605273
(87) Internationale Veröffentlichungsnummer: WO9721038

(56) Entgegenhaltungen:
- DE-A- 3 329 502
- DE-A- 3 416 797
- DE-U- 1 954 221
- DE-U- 9 110 499
- FR-A- 2 700 816

## Beschreibung

Die vorliegende Erfindung betrifft einen Dübel mit einer Hülse, die einen spreizbaren Bereich mit versenkbaren Vorsprüngen aufweist und in die ein stabartiges Spreizelement einbringbar ist, sowie ein Befestigungselement, das einen derartigen Dübel umfaßt.

Bekannte Dübel weisen Hülsen mit einem vorderen, geschlitzten, spreizbaren Endbereich auf. Die von einem Spreizelement bzw. Spreizstift ausgeübten Kräfte werden über den Spreizbereich auf die Befestigungszone flächig verteilt. Es entsteht Kraftschluß durch Pressung. Dabei wird die volle Spreizwirkung nicht schon beim Ansatz des Schlitzes bzw. der Schlitze an der Hülse wirksam, sondern erst in einem gewissen Abstand in Richtung auf den vorderen Endbereich zu.

Aus DE-G 91 10 499 ist ein Dübel mit einem zylindrischen Rohr bekannt, das im vorderen Endbereich seitliche Ausnehmungen für Keilelemente aufweist, die schwenkbar am Rohr gelagert sind und im wesentlichen vollständig innerhalb der Außenkontur des Rohrs in dieses einschwenkbar sind. Dadurch läßt sich im Spreizbereich der Rohrinnendurchmesser gegen Null verringern, so daß die mögliche Spreizung im wesentlichen allein dem gesamten Durchmesser des Spreizelements entspricht. Solche Dübel eignen sich besonders zum Einbringen in druckweiche Werkstoffe wie Gasbetonsteine. Dort können die Keilelemente über Hinterschnitte Formschluß mit dem Werkstoff herstellen. Die über die Keilelemente auf die Verankerungszone ausgeübten Kräfte werden nur auf eine sehr kleine Fläche verteilt. Dieser Dübel eignet sich daher weniger zum Einbringen in verhältnismäßig glattflächige Bohrungen mit harten Wänden, in denen eine Verankerung im wesentlichen über Kraftschluß hergestellt erfolgt.

Ein Dübel mit Druckplatte der Firma Hardo mit der Bezeichnung Upat ULR 10 besitzt im Bereich einer geschlitzten Spreizzone zwei flügelähnliche Vorsprünge, die jeweils an zwei Seiten mit der Dübelhülse verbunden sind. Diese lassen sich in Ausnehmungen in der Hülse pressen. Die Ausnehmungen haben allerdings keine Verbindung zur Hülsenbohrung. Die Vorsprünge verhindern ein Mitdrehen des Dübels beim Eindrehen einer Schraube in den Dübel. Die Vorsprünge werden nicht durch die Schraube gespreizt.

Die FR-A-2 700 816 betrifft einen Dübel mit einem hohlen Schaft, an dessen Außenseite Verankerungszungen angeordnet sind, welche sich in entgegengesetzten Richtungen öffnen. Die Ausdehnung dieser Verankerungszungen wird durch die Wirkung eines Spreizelementes auf Wülste hervorgerufen, die an dem Schaft derart angeordnet sind, daß sie eine Verstellung der Verankerungszungen zu dem Zeitpunkt der Öffnung der Verankerungszungen in entgegengesetzte Richtungen ermöglicht.

In dem DE-U-1 954 221 ist ein Spreizdübel offenbart, der aus einer äußeren Hülse besteht, in welcher Spreizklappen so angebracht sind, daß sie sich beim Eindrehen einer Schraube nach außen spreizen, in ein Befestigungselement eindringen und sich dort fest verankern können.

Eine Verwendung der aus der FR-A-2 700 816 und dem DE-U-1 954 221 bekannten Dübels zusammen mit einem Schlagstift ist problematisch, da das durch den Schlagstift verdrängte Material nicht verdrängt werden kann.

Ein Ziel der Erfindung besteht darin, einen Dübel zu schaffen, der eine Spreizzone aufweist, die vom vorderen Endbereich der Hülse entfernt angeordnet werden kann, wobei eine Verankerung des Dübels in einem Werk stoff über einen großflächigen Kraftschluß möglich sein soll.

Ein weiteres Ziel der Erfindung besteht darin, einen Dübel zu schaffen, bei dem ein Schlagstift als Spreizelement verwendet werden kann.

Diese Ziele werden durch die in den unabhängigen Ansprüchen angegebenen Merkmale erreicht. Zweckmäßige Weiterbildungen der Erfindung sind in den Unteransprüchen angegeben.

Erfindungsgemäß ist entweder die Dübelhülse mit einem geschlitzten vorderen Endbereich und zusätzlich mit einer in Richtung auf die Einführöffnung folgenden, weiteren Spreizzone mit Vorsprüngen versehen, oder es ist mindestens ein Spreizbereich mit als Flügel ausgeformten Vorsprüngen geschaffen, wobei die Flügel entlang einer im wesentlichen parallel zur Dübelachse verlaufenden Schwenkachse verschwenkbar sind. Vor dem Einführen eines stabartigen Spreizelements bzw. Spreizstifts sind die Flügel derart in Ausnehmungen der Hülse versenkbar, daß sie in die Bohrung der Hülse hineinragen.

Das Spreizelement kann entweder aus Kunststoff oder aus Metall bestehen. Obgleich das Spreizelement als Schlagstift ausgestaltet sein kann, ist ein mit Gewinde versehenes Spreizelement bevorzugt. Das Gewinde ist in der Lage, insbesondere in Umfangsrichtung ragende, flügelartige Vorsprünge in ihrer axialen Lage zu fixieren, so daß ein Verrutschen bei Zug- oder Druckbeanspruchung des Dübels verhindert werden kann.

Eine vorteilhafte Ausführungsform hat mindestens zwei flügelartig bzw. flügelförmig ausgebildete Vorsprünge, die in einem im wesentlichen in axialer Richtung verlaufenden Scharnierbereich mit der Hülse verbunden und im wesentlichen in derselben Höhe angeordnet sind. Diese Flügel springen dabei in Umfangsrichtung vor und sind einstückig mit der Hülse ausgebildet. Der Scharnierbereich eines Flügels kann dabei gegenüber der Dübelachse eine gewisse Neigung aufweisen.

Die Flügel können auch im vorderen Endbereich der Hülse anstelle eines geschlitzten Endbereichs vorgesehen sein. In einem solchen Dübel erfolgt beim Einbringen des Spreizelements eine Spreizung ohne axiale Stauchung. Es erfolgt deswegen beim Spreizen auch keine Relativbewegung zwischen Dübelhülse und Verankerungszone. Somit eignet sich dieser Dübel besonders zur Verankerung in zwei unterschiedlichen, voneinander beabstandeten Ebenen oder Werkstoffen, beispielsweise bei zweischaligen Mauerwerken oder bei Fensterrahmen in Fensteröffnungen.

In einer bevorzugten Ausführungsform hat die einer Verankerungszone zugewandte Oberfläche eines Flügels im gespreizten Zustand, in axialer Richtung gesehen, einen im wesentlichen konstanten Abstand zur Achse der Hülse.

Bevorzugt läßt sich ein Vorsprung vollständig innerhalb der Außenkontur der Hülse in eine hierfür vorgesehene Ausnehmung einschwenken.

Wird insbesondere der vordere Endbereich der Hülse, der am tiefsten in eine Bohrung eingebracht wird, mit axialen Schlitzen versehen, so eignet sich der Dübel besonders gut zum Setzen in harte Materialien, die in tieferen Bereichen eine relativ gleichmäßige Bohrung erwarten lassen. Besonders günstig ist es, die Vorsprünge derart an dem Schlitz bzw. den Schlitzen zu orientieren, daß die Spreizwirkung von geschlitztem Bereich und Vorsprünge versetzt zueinander erfolgt, beispielsweise um etwa 90° versetzt.

Allgemein eignen sich erfindungsgemäße Dübel und Befestigungselemente besonders für den Einsatz in Materialien, bei denen ungewiß ist, ob sich eine regelmäßige Bohrung mit gleichmäßigem Durchmesser einbringen läßt, wie z. B. Hohlbaustoffe, da sich nicht nur im vorderen Endbereich der Hülse eine Spreizzone anbringen läßt. Dies gilt beispielsweise bei Hochlochziegeln, deren massiver Kern zunehmend kleiner gestaltet wird, so daß beim Bohren die verbleibenden, relativ dünnen Stege beschädigt werden können. In diesem Fall gewährleistet eine oberflächennahe Spreizzone der Hülse, daß dennoch eine zuverlässige Verankerung in der Außenwand des Steins erfolgt. Denn die Vorsprünge können nahe an der Einführöffnung für das stabartige Spreizelement angeordnet werden, ohne daß die Stabilität des Dübels zu stark beeinträchtigt wird. Der Abstand zwischen Vorsprung und Einführöffnung der Hülse kann weniger als 1/10 der Hülsenlänge betragen. Vorteilhafterweise lassen sich erfindungsgemäß Dübelhülsen schaffen, die besonders lange Spreizzonen für eine sichere Verankerung in Lochsteinen aufweisen.

Dabei ist besonders vorteilhaft, daß die bevorzugten Vorsprünge bzw. Flügel ihre maximale Spreizwirkung sofort sprungartig entfalten. Die volle Spreizwirkung wird also nicht erst im weiteren axialen Verlauf der Spreizzone allmählich erreicht, sondern bereits an ihrem Beginn. Dabei kann die Stirnseite eines Vorsprungs, gesehen von der Einführöffnung, besonders in unregelmäßigen Bohrungen eine Verhakung mit dem Werkstoff und somit Formschluß bewirken.

Ein bevorzugtes Anwendungsgebiet für die Erfindung besteht bei zweischaligen Mauerwerken, bei denen beispielsweise zwischen einer tragenden Wand und einer Klinkerblendfassade ein Hohlraum besteht. Eine erste Spreizzone am vorderen Endbereich der Hülse einer vorteilhaften Ausführungsform verankert den Dübel in der tragenden Wand, wodurch die Fassade gegen Windsog gesichert wird. Eine zweite Spreizzone, die mit Vorsprüngen ausgestattet ist, wird in der Fassade verankert, so daß eine Abstützung der Fassade gegenüber der Wand erfolgt. Vorteilhaft ist hierbei insbesondere, daß ein derartiger Dübel noch nachträglich angebracht werden kann. Es kann somit problemlos eine nachträgliche Stabilisierung bzw. Sanierung von Fassaden vorgenommen werden, die bisher mit Metallankern gehalten wurden, die korrodieren können.

Bevorzugt sind die Flügel in axialer Richtung länger als der Außendurchmesser der Hülse. Besonders bevorzugt beträgt diese Länge das 1,5-fache bis 10-fache des Außendurchmessers der Hülse.

Bei einer vorteilhaften Ausführungsform ist die Abmessung der seitlichen Flügel in Umfangsrichtung, gemessen an der stirnseitigen, der Hülsenöffnung zugewandten Kante, zwischen 1/7 und 1/3 des Hülsenumfangs.

Die Flügel können mit einer Profilierung versehen sein. Dadurch ist in einem harten Untergrund eine Materialverdrängung beim Pressen der Flügel an die Verankerungszone möglich. Dabei kann die Profilierung als eine Vielzahl von schmalen Vorsprüngen ausgestaltet sein, die sich deutlich von den Flügeloberflächen erheben. Dadurch werden die Flügel beim Einführen des Dübels in eine Bohrung besonders stark in die Hülsenbohrung eingedrückt. Beim anschließenden Einführen des Spreizelements in die Hülsenbohrung werden die Flügel vollständig aus der Bohrung verdrängt, wodurch die Vorsprünge besonders stark in die Verankerungszone, gegebenenfalls unter Verformung, angepreßt werden.

Ein erfindungsgemäßes Befestigungselement kann ein in die Hülse einbringbares Spreizelement aufweisen, das im hinteren Bereich, der dem Stiftkopf zugewandt ist, einen größeren Durchmesser besitzt, wobei beide Bereiche Gewinde aufweisen. Damit kann beispielsweise bei einem zweischaligen Mauerwerk beim Einschrauben des Spreizelements geprüft werden, ob sich der Dübel auch in der tragenden Wand verankert. Die Montagesicherheit wird hierdurch deutlich erhöht.

Für den Einsatz des erfindungsgemäßen Dübels zusammen mit einem Schlagstift ist es vorteilhaft, am Dübel Zonen auszubilden, die eine Verdrängung von Material der Hülse erlauben. Während bei einem einschraubbaren Spreizelement auf solche Zonen problemlos verzichtet werden kann, ist das Eintreiben eines Schlagstiftes anderenfalls sehr schwierig. Als Bereiche, die während eines stoßartigen Eintreibens eines Schlagstifts kurzfristig radial gedehnt werden können, kommen Ausnehmungen bzw. Zonen mit dünnerer Wandung im Bereich des Dübelschaftes sowohl an der Dübelaußenwand wie auch an der Dübelinnenwand in Frage.

Ebenso kann im Bereich der Flügel entlang deren Schwenkachse Material an der Außenseite abgetragen sein. Dies ist vor allem vorteilhaft, wenn der Spreiz- bzw. Schlagstift aus einem Material geringerer Festigkeit, beispielsweise aus Kunststoff, besteht. Zur seitlichen Kante des Flügels hin muß allerdings wieder die volle Wandstärke erreicht werden, um die volle Spreizwirkung bereitstellen zu können. Wird auf diese Weise Material im Bereich der Schwenkachse eines Flügels eingespart, so ist es günstig, die Festigkeit und Stabilität des Flügels an der Dübelhülse durch einen axialen Steg wieder zu erhöhen.

Weitere Vorteile, Merkmale und Anwendungsmöglichkeiten der Erfindung ergeben sich aus der nachfolgenden Beschreibung der Ausführungsbeispiele in Verbindung mit den Zeichnungen. Es zeigen
- Fig. 1: zwei in einen Werkstoff eingebrachte Dübel vor dem Einschrauben eines Spreizelements, wobei ein Dübel um 90° gedreht dargestellt ist,
- Fig. 2: einen Schnitt durch die Hülsen der Dübel von Fig. 1,
- Fig. 3: die Dübel von Fig. 1 nach dem Einschrauben des Spreizelements,
- Fig. 4: einen Schnitt durch die Hülsen der Dübel von Fig. 3,
- Fig. 5: einen Dübel mit Druckplatte,
- Fig. 6: zwei in beabstandete Werkstoffe eingebrachte Dübel,
- Fig. 7: einen Dübel mit zwei Spreizzonen, die jeweils durch Flügel gebildet werden,
- Fig. 8: einen Dübel mit geschwächten Zonen an der Hülse,
- Fig. 9: einen Längsschnitt durch den Dübel von Fig. 8,
- Fig. 10: einen Querschnitt durch den Dübel von Fig. 8.

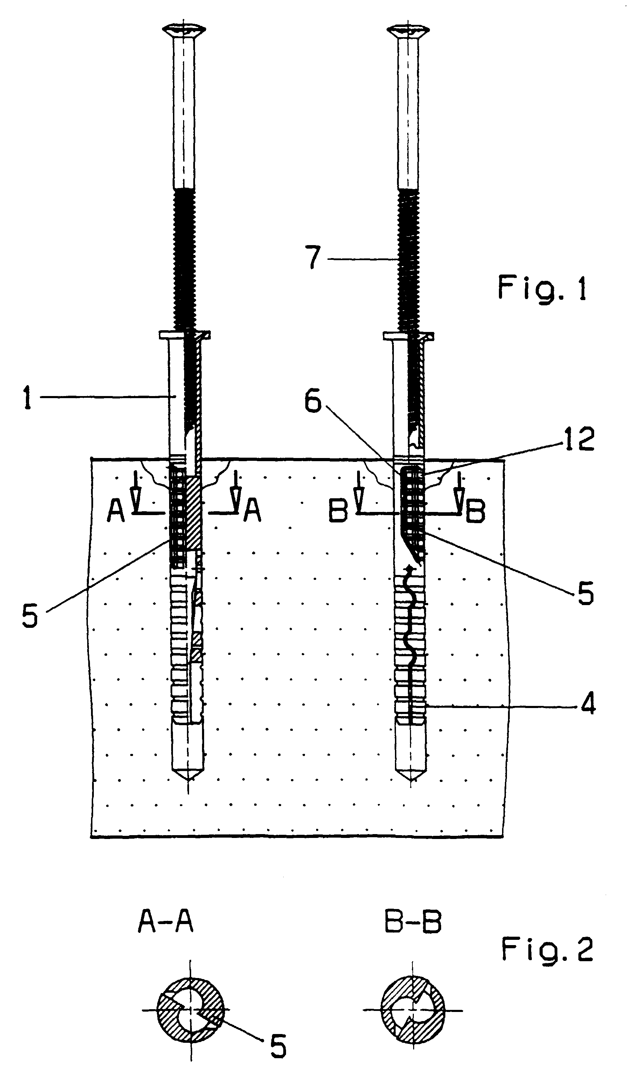

In Fig. 1 sind zwei erfindungsgemäße Dübel dargestellt, die zueinander in einem Winkel von 90° verdreht sind. Die Kunststoffhülse 1 ist in einen Werkstoff eingebracht. Sie weist einen hinteren Spreizbereich mit zwei Flügeln 5 und einen vorderen Spreizbereich mit einem Schlitz 4 auf. Das einschraubbare, metallische Spreizelement 7 ist noch nicht angezogen. Die Flügel 5 weisen eine Profilierung 12 auf, wodurch beim Pressen der Flügel an die Verankerungszone eine Materialverdrängung möglich ist. Die Flügel 5 sind in die Ausnehmung 6 gepreßt.

Fig. 2 zeigt einen Schnitt durch die in Fig. 1 dargestellten Hülsen 1 in Höhe der Flügel 5. Die Flügel sind in die Ausnehmungen 6 gepreßt und ragen nicht über die Außenkontur der Hülse hervor.

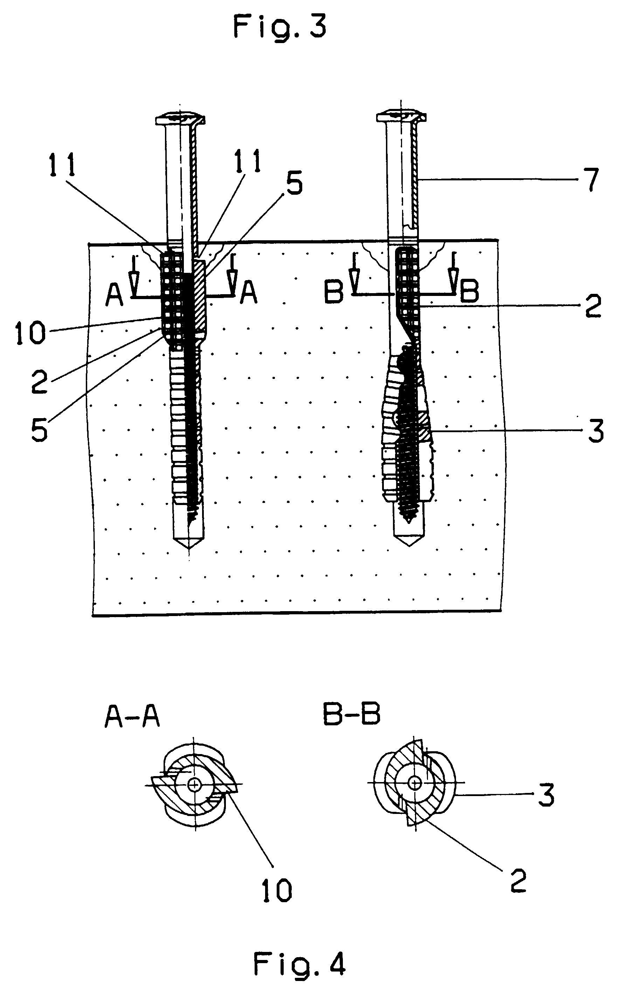

In Fig. 3 sind die Dübel von Fig. 1 mit vollständig eingeschraubten Spreizelementen dargestellt, wodurch der hintere Spreizbereich 2 und der vordere Spreizbereich 3 wirksam werden. Dadurch wird der Flügel 5, dessen Materialstärke in Umfangsrichtung zunimmt, radial nach außen gedrückt.

Die beiden Flügel 5 der Hülse 1 sind in axialer Richtung zueinander versetzt, so daß die Stirnseiten 11 sich in unterschiedlichen Höhen befinden. Dadurch entsteht in den oberen und unteren Ansätzen des Scharnierbereichs der Flügel ein verhältnismäßig breiter Steg, der der Festigkeit der Hülse förderlich ist.

Die Flügel 5 verjüngen sich in ihrem unteren Bereich. Sie sind gleichsinnig, entgegen der Drehrichtung des Spreizelements 7 angeschrägt, wobei die Schräge abgerundet ist. Diese Schrägen der Flügel erleichtern das Einführen der Hülse in einen Werkstoff. Zusätzlich läßt sich durch eine versetzte Anordnung von Schlitz 4 des vorderen Spreizbereichs 3 und der Schrägen der Flügel 5 des hinteren Spreizbereichs 2 eine eng aufeinanderfolgende Anordnung von hinterem und vorderem Spreizbereich 2, 3 bewerkstelligen.

Wie besonders in Verbindung mit Fig. 4 deutlich wird, springen die Seitenkanten 10 der Flügel 5 in Drehrichtung des Spreizelements 7 vor. Dadurch krallen sich die Flügel beim Eindrehen des Spreizelements 7 in den Werkstoff und verhindern ein Mitdrehen des Dübels.

Weiter ist aus Fig. 4 erkennbar, daß die Spreizwirkung von hinterem Spreizbereich 2 und vorderem Spreizbereich 3 etwa eine Vierteldrehung versetzt zueinander wirksam werden.

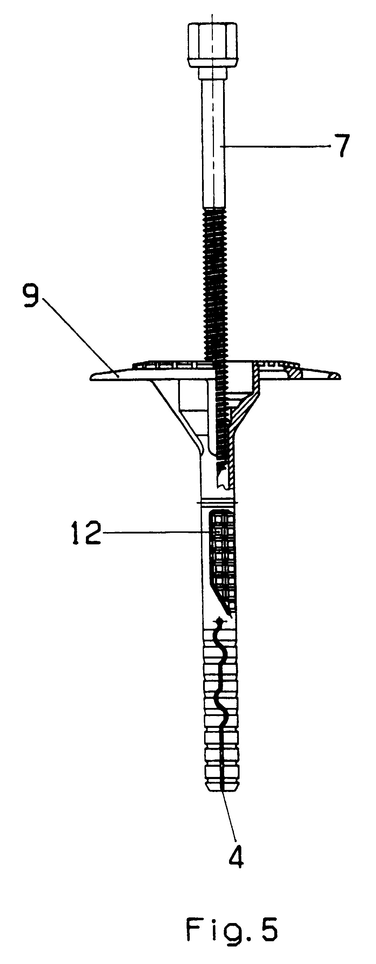

Fig. 5 zeigt einen Dübel mit großflächiger Druckplatte 9. Er eignet sich somit zum Anbringen von Dämmstoffplatten an Gebäudewänden.

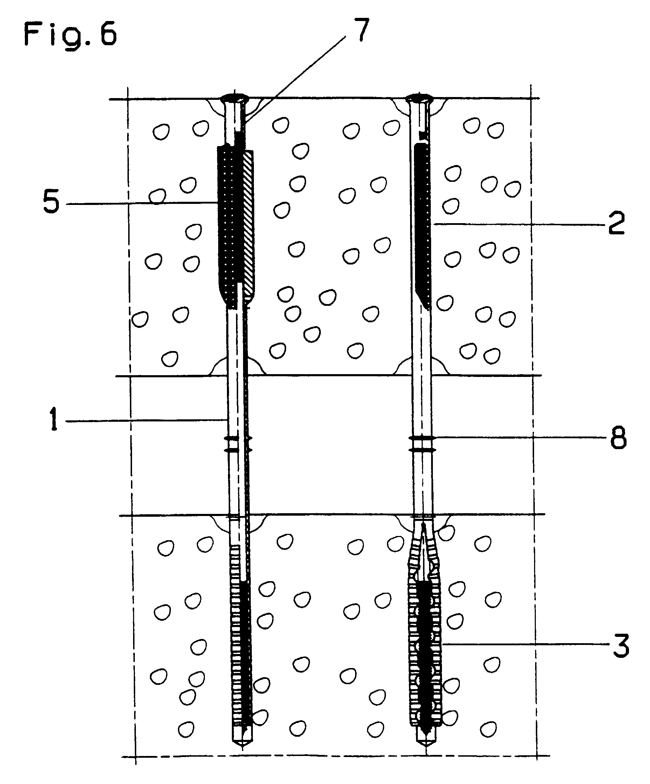

In Fig. 6 sind zwei Dübel dargestellt, die in einem zweischaligen Mauerwerk verankert sind. Das metallische Spreizelement 7 soll dabei zwei voneinander beabstandete Gewindeabschnitte unterschiedlichen Durchmessers, aber derselben Gewindesteigung aufweisen. Zwischen zwei Werkstoffschichten, nämlich der tragenden Wand und der Fassade, befindet sich ein Hohlraum. Der hintere Spreizbereich 2 der Hülse 1 ist von dem vorderen Spreizbereich 3 beabstandet. Dazwischen befindet sich ein Schaftbereich ohne Spreizzone. In dieser Zone der Hülse 1 ist ein Paar von Abtropflippen 8 so angeordnet, daß sich dieselben im Hohlraum befinden. An den Abtropflippen 8 kann sich Kondenswasser sammeln und nach unten abtropfen, anstatt unerwünschterweise in die Werkstoffschichten einzudringen.

Um die Montagesicherheit zu erhöhen, hat das Spreizelement 7 einen hinteren Abschnitt größeren Durchmessers, der für den hinteren Spreizbereich 2 vorgesehen ist, und einen vorderen Abschnitt geringeren Durchmessers. Im oberen Abschnitt kann beispielsweise ein Kunststoffgewinde angespritzt werden. Dadurch wird beim Eindrehen des Spreizelements verhindert, daß zunächst der hintere Spreizbereich 2, der sich in der Fassade befindet, voll gespreizt wird, wodurch eine Probe, ob der vordere Spreizbereich 3 den Dübel in der tragenden Wand zuverlässig verankert, unmöglich würde.

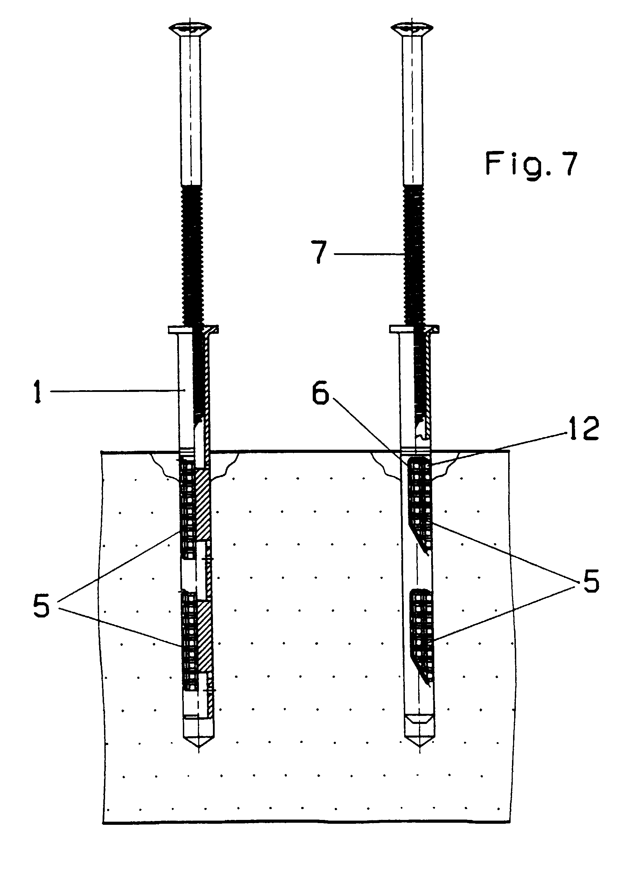

In Figur 7 sind wie in Figur 1 zwei Dübel dargestellt, die zueinander in einem Winkel von 90° verdreht sind. Jedoch ist sowohl der hintere als auch der vordere Spreizbereich aus Flügeln 5 gebildet. Beim Einschrauben des Spreizelements 7 erfolgt keine axiale Stauchung der Hülse 1 und somit auch keine Relativbewegung zwischen Hülse 1 und der Verankerungszone im Untergrund.

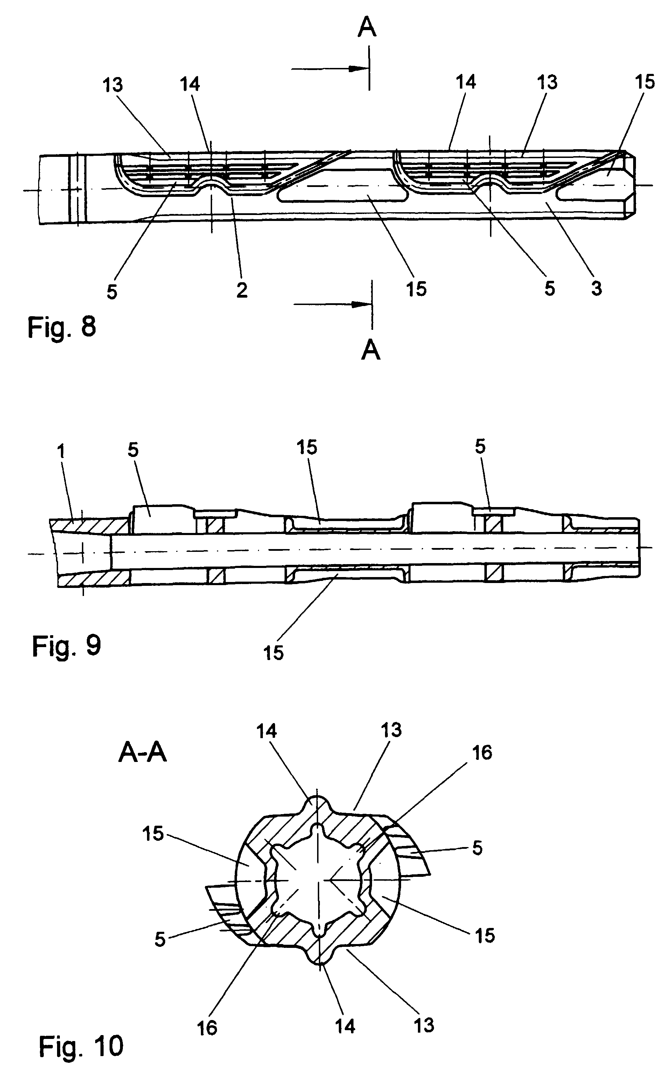

Fig. 8 zeigt einen Dübel, der zwei in axialer Richtung aufeinanderfolgende, mit Flügeln 5 gebildete Spreizzonen aufweist. Dabei ist dieser Dübel speziell für die Verwendung eines Schlagstifts als Spreizelement angepaßt. Zwischen den Spreizzonen weist die Dübelhülse in ihrer Außenwandung zwei taschenartige Ausnehmungen 15 auf gegenüberliegenden Seiten auf. Ist der Dübel in einen Untergrund eingebracht und wird ein Schlagstift in die Hülsenbohrung eingetrieben, so kann Kunststoffmaterial der Hülse, das zwischen den mit den Flügeln 5 gebildeten Spreizzonen liegt, in die Ausnehmungen 15 verdrängt werden. Auf diese Weise wird das Eintreiben eines Schlagstifts erheblich erleichtert, ohne daß die Dübelwandung insgesamt dünner ausgeführt werden müßte. Somit bleibt im Bereich der Spreizzonen die volle Spreizwirkung erhalten.

Im Bereich der Schwenkachsen der Flügel 5 ist an der Dübelaußenseite eine geschwächte Zone 13 bzw. Abflachung eingebracht, die ebenfalls eine Materialverdrängung beim Eintreibvorgang erlaubt. Die Zone 13 mit dünner Wandung erstreckt sich in Umfangsrichtung zu beiden Seiten der Schwenkachse des Flügels. Sie erstreckt sich aber nicht in Umfangsrichtung bis zur Seitenkante des Flügels 5, um die Spreizwirkung nicht zu beeinträchtigen. Aufgrund der durch die Zone 13 mit dünner Wandung bewirkten Abflachung des Spreizbereichs wird die Bogenlänge des Flügels 5 kürzer gehalten. Daher kann Dübelmaterial durch eine kurzfristige Materialverdrängung in die entstandenen Hohlräume ausweichen. In axialer Richtung erstreckt sich die Zone 13 vom hinteren Spreizbereich 2 bis in den vorderen Spreizbereich 3 hinein. Es wird daher auch von der Zone 13 ein zwischen den Flügeln 5 liegender Abschnitt des Dübelschaftes erfaßt, der nicht zum Spreizbereich gehört.

Die Schwenkachse der Flügel 5 ist durch einen axial verlaufenden Steg 14 gestärkt, der die Festigkeit und Stabilität der Flügel 5 bzw. des Spreizbereichs und der Hülse 1 erhöht. Der axiale Steg 14 verläuft durchgehend in axialer Richtung entlang des hinteren Spreizbereichs 2 und des vorderen Spreizbereichs 3 inmitten der geschwächten Zone 13, einschließlich eines zwischen den Spreizbereichen bzw. -flügeln liegenden Hülsenabschnitts.

Fig. 9 zeigt einen Längsschnitt durch den in Fig. 8 gezeigten Dübel. Dabei sind die Ausnehmungen 15 zu beiden Seiten der Hülse erkennbar. Insbesondere wird deutlich, daß die durch Schraffur gekennzeichnete Hülsenwand in diesem Bereich dünn ausgeführt ist.

Fig. 10 zeigt einen Querschnitt entlang der Linie A-A. Neben den geschwächten Bereichen 13 in der Außenwand sind axial verlaufende Nuten 16 in der Hülseninnenwand dargestellt. Es handelt sich dabei um radiale Vorsprünge der Hülsenbohrung, die sich in axialer Richtung erstrecken und das Volumen der Hülsenbohrung erweitern. Die Nuten 16 schaffen folglich zusätzliche Hohlräume, in die Hülsenmaterial beim Eintreiben eines Spreizelements fließen kann. Damit ist die in den Fig. 8 bis 10 veranschaulichte Ausführungsform besonders gut für eine Verwendung mit Schlagstiften als Spreizelement geeignet, wobei nicht nur metallische Schlagstifte, sondern auch solche aus Kunststoff eingesetzt werden können.

### Bezugszeichenliste

- 1: Hülse
- 2: hinterer Spreizbereich
- 3: vorderer Spreizbereich
- 4: Schlitz
- 5: Flügel
- 6: Ausnehmung für Flügel 5
- 7: Spreizelement
- 8: Abtropflippe
- 9: Druckplatte
- 10: Seitenkante des Flügels 5
- 11: Stirnseite des Flügels 5
- 12: Profilierung des Flügels 5
- 13: Bereich des Flügels mit dünner Wandung
- 14: axialer Steg
- 15: Ausnehmung in der Hülse 1
- 16: Nut in der Hülseninnenwand

## Patentansprüche

1. Dübel mit einer zylindrischen Hülse (1), die Ausnehmungen (6) und als Flügel (5) ausgeformte Vorsprünge aufweist, wobei die Flügel (5) derart verschwenkbar sind, daß sie vor dem Einführen eines stabartigen Spreizelements (7) in die Bohrung der Hülse (1) derart in den Ausnehmungen (6) versenkbar sind, daß sie in die Bohrung der Hülse hineinragen, und daß sie nach dem Einführen des Spreizelements (7) von diesem in ihrer Spreizposition gehalten werden, **dadurch gekennzeichnet, daß**
mindestens ein Flügel (5) im Bereich seiner im wesentlichen parallel zur Dübelachse verlaufenden Schwenkachse und im Anschluß an die Schwenkachse in axialer Richtung einen Bereich (13) mit einer Wandung aufweist, die dünner ausgeführt ist als die Wandung in dem Bereich, der im wesentlichen die Spreizwirkung auf eine Verankerungszone bereitstellen soll.

2. Dübel nach dem vorhergehenden Anspruch, dadurch gekennzeichnet, daß die Schwenkachse eines Flügels (5) mit einem axial verlaufenden Steg (14) verstärkt ist.

3. Dübel nach einem der vorhergehenden Ansprüche, dadurch gekennzeichnet, daß die Hülse (1) an ihrer Außenseite mindestens eine Ausnehmung (15) aufweist.

4. Dübel nach einem der vorhergehenden Ansprüche, dadurch gekennzeichnet, daß die Hülsenbohrung mindestens einen radialen Vorsprung (16) besitzt, der in axialer Richtung eine Nut in der Hülseninnenwand bildet.

5. Dübel nach einem der vorhergehenden Ansprüche, dadurch gekennzeichnet, daß das Spreizelement (7) ein Spreizstift, insbesondere ein Nagel, ist.

6. Dübel nach dem vorhergehenden Anspruch, gekennzeichnet durch zwei Flügel (5), bei denen wenigstens eine Stirnseite (11) zur entsprechenden Stirnseite des anderen Flügels in axialer Richtung versetzt ist.

7. Dübel nach einem der vorhergehenden Ansprüche, dadurch gekennzeichnet, daß die Breite der Flügel (5) in Umfangsrichtung zwischen 1/7 und 1/3 des Umfangs der Hülse (1) beträgt.

8. Dübel nach einem der vorhergehenden Ansprüche, dadurch gekennzeichnet, daß die Länge der von der Hülse (1) in Umfangsrichtung vorspringenden Kante (10) eines Flügels (5) größer als der Außendurchmesser der Hülse ist.

9. Dübel nach einem der vorhergehenden Ansprüche, dadurch gekennzeichnet, daß wenigstens ein Flügel (5) eine Kante (10) aufweist, die umfangsmäßig in Drehrichtung eines mit Gewinde versehenen Spreizelements (7) vorspringt.

10. Dübel nach einem der vorhergehenden Ansprüche, gekennzeichnet durch Flügel (5), die derart angeschrägt sind, daß sie einen Abschnitt aufweisen, entlang dem sie sich in Einführrichtung der Hülse verjüngen.

11. Dübel nach dem vorhergehenden Anspruch, dadurch gekennzeichnet, daß sich die angeschrägten Flügel (5) gleichsinnig verjüngen.

12. Dübel nach einem der vorhergehenden Ansprüche, gekennzeichnet durch Flügel (5), die an ihren für den Kontakt mit einer Verankerungszone bestimmten Oberfläche eine Profilierung (12) aufweisen.

13. Dübel nach dem vorhergehenden Anspruch, dadurch gekennzeichnet, daß die Profilierung (12) aus einer Vielzahl von Vorsprüngen besteht.

## Claims

1. A wall plug having a cylindrical sleeve (1), which comprises recesses (6) and projections in the form of wings (5), the wings (5) being swivellable in such a manner that they may be folded away in the recesses (6) prior to insertion of a rod-like expansion member (7) into the bore in the sleeve (1), in such a way that they project into the bore in the sleeve and that, after insertion of the expansion member (7), they are held thereby in their expanded position, **characterised in that**
at least one wing (5) comprises an area (13) in the region of its swivel axis extending substantially parallel to the wall plug axis and adjacent the swivel axis in the axial direction, said area (13) having a wall which is thinner than the wall in the area which is substantially intended to provide the expanding action to form an anchoring zone.

2. A wall plug according to the preceding claim, characterised in that the swivel axis of a wing (5) is reinforced by an axially extending ridge (14).

3. A wall plug according to one of the preceding claims, characterised in that the sleeve (1) comprises at least one recess (15) on its outside.

4. A wall plug according to one of the preceding claims, characterised in that the sleeve bore comprises at least one radial projection (16), which forms a groove in the sleeve inner wall in the axial direction.

5. A wall plug according to one of the preceding claims, characterised in that the expansion member (7) is an expansion pin, in particular a nail.

6. A wall plug according to the preceding claim, characterised by two wings (5), of which at least one end face (11) is staggered in the axial direction relative to the corresponding end face of the other wing.

7. A wall plug according to one of the preceding claims, characterised in that the width of the wings (5) in the circumferential direction amounts to between 1/7 and 1/3 of the circumference of the sleeve (1).

8. A wall plug according to one of the preceding claims, characterised in that the length of the edge (10) of a wing (5) projecting from the sleeve (1) in the circumferential direction is greater than the external diameter of the sleeve.

9. A wall plug according to one of the preceding claims, characterised in that at least one wing (5) comprises an edge (10) which projects circumferentially in the direction of rotation of a threaded expansion member (7).

10. A wall plug according to one of the preceding claims, characterised by wings (5), which are bevelled in such a way that they comprise a portion along which they taper in the direction of insertion of the sleeve.

11. A wall plug according to the preceding claim, characterised in that the bevelled wings (5) taper in the same direction.

12. A wall plug according to one of the preceding claims, characterised by wings (5), which comprise profiling (12) on the surface thereof intended for contact with an anchoring zone.

13. A wall plug according to the preceding claim, characterised in that the profiling (12) consists of a plurality of projections.

## Revendications

1. Cheville comportant une douille cylindrique (11), qui possède des évidements (6) et des parties saillantes agencées sous la forme d'ailes (5), les ailes (5) pouvant pivoter de telle sorte qu'elles peuvent être placées en renfoncement dans les évidements (6), avant l'introduction d'un élément d'écartement en forme de tige (7) dans le perçage de la douille (1) de telle sorte qu'elle pénètre dans le perçage de la douille, et qu'après introduction de l'élément d'écartement (7), elles sont retenues par ce dernier dans leur position écartée, caractérisée en ce
qu'au moins une aile (5) possède dans la zone de son axe de pivotement, qui est essentiellement parallèle à l'axe de la douille, d'une manière se raccordant à l'axe de pivotement dans la direction axiale, une partie (13) pourvue d'une paroi qui est plus mince que la paroi située dans la zone qui doit appliquer essentiellement l'action d'écartement à une zone d'ancrage.

2. Cheville selon la revendication précédente, caractérisée en ce que l'axe de pivotement d'une aile (5) est renforcé par une barrette axiale (14).

3. Cheville selon l'une des revendications précédentes, caractérisée en ce que la douille (1) possède sur sa face extérieure au moins un évidement (15).

4. Cheville selon l'une des revendications précédentes, caractérisée en ce que le perçage de la douille possède au moins une partie saillante radiale (16), qui forme, dans la direction axiale, une rainure dans la paroi intérieure de la douille.

5. Cheville selon l'une des revendications précédentes, caractérisée en ce que l'élément d'écartement (7) est une tige d'écartement, notamment un clou.

6. Cheville selon la revendication précédente, caractérisée par deux ailes (5), dans lesquelles au moins une face frontale (11) est décalée dans la direction axiale par rapport à la face frontale correspondante de l'autre aile.

7. Cheville selon l'une des revendications précédentes, caractérisée en ce que la largeur des ailes (5) dans la direction circonférentielle est comprise entre 1/7 et 1/3 du périmètre de la douille (1).

8. Cheville selon l'une des revendications précédentes, caractérisée en ce que la longueur du bord (10), qui fait saillie à partir de la douille (1) dans la direction circonférentielle, d'une aile (5) est supérieure au diamètre extérieur de la douille.

9. Cheville selon l'une des revendications précédentes, caractérisée en ce qu'au moins une aile (5) possède un bord (10) qui fait saillie circonférentiellement dans le sens de rotation d'un élément d'écartement (7) pourvu d'un filetage.

10. Cheville selon l'une des revendications précédentes, caractérisée par des ailes (5) qui sont biseautées de telle sorte qu'elles possèdent une partie, le long de laquelle elles se rétrécissent dans la direction d'introduction de la douille.

11. Cheville selon la revendication précédente, caractérisée en ce que les ailes biseautées (5) se rétrécissent dans le même sens.

12. Cheville selon l'une des revendications précédentes, caractérisée par des ailes (5) qui possèdent un profil (12) sur leur surface destinée à être en contact avec une zone d'ancrage.

13. Cheville selon l'une des revendications précédentes, caractérisée en ce que le profil (12) est constitué par une multiplicité de parties saillantes.
